# EUROPÄISCHE PATENTANMELDUNG

(11) **EP 2 863 046 A1**
(43) Veröffentlichungstag der Anmeldung: **22.04.2015**
(21) Anmeldenummer: 14188803.2
(22) Anmeldetag: 14.10.2014
(51) Int. Cl.: F02M 53/06, F02M 51/06, F02D 41/20, F02M 31/125, F02D 41/06

(54) **Verfahren zur Sicherstellung des Kaltstarts eines mit Ethanol-Kraftstoff betriebenen Ottomotors**

(30) Priorität: 21.10.2013 DE 102013221320
(71) Anmelder: Robert Bosch GmbH, 70442 Stuttgart (DE)
(72) Erfinder: Klenk, Rainer, 70806 Kornwestheim (DE); Scheurer, Hans-Peter, 71672 Marbach (DE)

(57) **Zusammenfassung**

Es wird ein Verfahren zur Sicherstellung des Kaltstarts eines mit Ethanol-Kraftstoff betriebenen Ottomotors, der mindestens ein Einspritzventil (10) zum dosierten Einspritzen von Kraftstoff in den Verbrennungszylinder (12) mit einem Ventilglied (19) zum Schließen und Freigeben einer Ventilöffnung (18) und einem das Ventilglied (19) betätigenden, von einem Steuergerät (37) gesteuerten elektrischen Aktor (21) aufweist, angegeben, bei welchem zur Bildung eines brennfähigen Kraftstoffgemisches im Verbrennungszylinder (12) vor dem Einspritzen im Einspritzventil (10) thermische Energie erzeugt und dem im Einspritzventil (10) befindlichen Kraftstoff zugeführt wird. Um den Einbau zusätzlicher Komponenten in das Einspritzventil (10) zu vermeiden, wird die für die Erwärmung des Kraftstoffs auf Verdampfungsniveau erforderliche thermische Energie aus der Verlustleistung des elektrischen Aktors (21) gewonnen, indem in einer dem Kaltstart zeitlich vorgeschalteten Vorlaufphase der elektrische Aktor (21) definiert so bestromt wird, dass die am Ventilglied (19) angreifende Betätigungskraft des Aktors (21) stets kleiner ist als eine am Ventilglied (19) zum Schließen der Ventilöffnung (18) wirksame Schließkraft.

## Beschreibung

### Stand der Technik

Die Erfindung geht aus von einem Verfahren zur Sicherstellung des Kaltstarts eines mit Ethanol-Kraftstoff betriebenen Ottomotors nach dem Oberbegriff des Anspruchs 1.

Bei Ottomotoren mit einer Kraftstoffeinspritzanlage wird mittels elektrisch gesteuerter Einspritzventile Kraftstoff dosiert in die Verbrennungszylinder, und zwar in den Einlass oder Brennraum eines jeden Verbrennungszylinders, eingespritzt, der mit der angesaugten Luft ein brennfähiges Gemisch bildet. Ein Steuergerät übernimmt die Berechnung von Einspritzfunktion und Ansteuerung der Einspritzventile.

Bei Betreiben mit Ethanol-Kraftstoff, wie E85 (Benzin mit 85% Beimischung von Ethanol) oder E100 (reines Ethanol) ist der Kaltstart des Motors problematisch, da Ethanol im Unterschied zu Benzin und Superkraftstoff einen von Druck und Temperatur abhängigen Verdampfungspunkt hat. Ist die Temperatur zu niedrig und der Druck zu hoch, bleibt der Ethanol-Kraftstoff im Einlass oder Brennraum des Verbrennungszylinders flüssig und bildet mit der angesaugten Verbrennungsluft kein zündfähiges Gemisch.

Zur Sicherstellung des Kaltstarts wird bei einem bekannten Verfahren (US 2008/0223346 A1) vor dem Einspritzen thermische Energie in das im Einspritzventil befindlichen Kraftstoffvolumen eingebracht, um das ausreichende Verdampfen des Ethanols im Einlass oder Brennraum des Verbrennungszylinders zu gewährleisten. Hierzu ist im Einspritzventil eine Heizspule integriert, die über den elektrischen Anschlussstecker des Einspritzventils mit Wechselstrom bestromt wird. Das von der Spule erzeugte elektromagnetische Feld heizt den Ventilkörper auf und verdampft Kraftstoff aus dem Kraftvolumen im Einspritzventil.

### Offenbarung der Erfindung

Das erfindungsgemäße Verfahren zur Sicherstellung des Kaltstarts eines mit Ethanol-Kraftstoff betriebenen Ottomotors hat den Vorteil, dass zur Erwärmung des Ethanol-Kraftstoffs auf dessen Verdampfungsniveau keine zusätzlichen Komponenten im Einspritzventil erforderlich sind. Lediglich im Steuergerät muss eine entsprechende Funktion zur Bestromung des elektrischen Aktors in einer solchen Weise vorgesehen werden, dass ein Betätigen des Ventilglieds durch den Aktor sicher verhindert ist und somit das Einspritzventil in der dem Kaltstart vorgeschalteten Vorlaufphase geschlossen bleibt. Die wesentlichen Parameter der Bestromungsfunktion können als Applikationsparameter in Abhängigkeit von dem jeweils verwendeten Einspritzventil, der Einbausituation und den Umgebungsbedingungen im Verlauf der Serienentwicklung eingestellt werden.

Durch die in den weiteren Ansprüchen aufgeführten Maßnahmen sind vorteilhafte Weiterbildungen und Verbesserungen des im Anspruch 1 angegebenen Verfahrens möglich.

Gemäß einer vorteilhaften Ausführungsform der Erfindung wird die Bestromung des elektrischen Aktors so durchgeführt, dass die am Ventilglied angreifende Betätigungskraft des Aktors stets kleiner ist als die am Ventilglied zum Schließen der Ventilöffnung wirksame Schließkraft. Die Bestromung des elektrischen Aktors kann dabei auf verschiedene Weise durchgeführt werden. Bei Bestromung mit Konstantstrom wird dabei sichergestellt, dass der Strom unterhalb einer Schwelle bleibt, die überschritten werden muss, damit der Aktor das Ventilglied des Einspritzventils gegen die am Ventilglied wirksame Schließkraft von der Ventilöffnung abhebt und dadurch Kraftstoff eingespritzt wird. Bei Bestromung mit Stromimpulsen gleichen Vorzeichens wird die Dauer der Bestromungsimpulse so kurz bemessen, dass sich die für das Betätigen der Ventilnadel erforderliche Aktorkraft nicht ausbilden kann. Von Vorteil ist dabei, dass das Stromniveau der Stromimpulse höher bemessen werden kann als bei einer Bestromung des elektrischen Aktors mit einem konstant anliegenden Strom.

Gemäß einer vorteilhaften Ausführungsform der Erfindung wird bei Einsatz eines Elektromagneten als elektrischen Aktor des Einspritzventils zur Gewinnung einer ausreichenden Wärmemenge aus der elektrischen Verlustleistung des Elektromagneten eine Serie von Stromimpulsen geschaltet, deren Unterbrechungsdauer lang genug ist, um das entstehende Magnetfeld des Elektromagneten wieder abklingen zu lassen. Eine Bestromung des Elektromagneten mit elektrischen Stromimpulsen wechselnden Vorzeichens hat gegenüber der Bestromung mit Stromimpulsen gleichen Vorzeichens den Vorteil, dass die zum Abklinge des Magnetfelds erforderlichen Pausen zwischen den einzelnen Serien von Stromimpulsen verkürzt werden können und der effektive Strom für die Bestromung höher ausgelegt werden kann.

Gemäß einer vorteilhaften Ausführungsform der Erfindung wird die Zeitdauer der Vorlaufphase auf die Bestromung des Aktors und auf den individuellen Wärmeübergang vom Aktor auf den Kraftstoff im Ventil abgestimmt. Durch konstruktive Maßnahmen kann dieser Wärmeübergang verbessert werden. Bei Einsatz eines als Elektromagnet mit sog. Ankerfreiweg ausgebildeten elektrischen Aktors des Einspritzventils, wie ein solches in der DE 101 08 945 A1 beschrieben ist, wird der Wärmeübergang der im Elektromagnet erzeugten Verlustleistung auf das im Einspritzventil vorhandene Ethanol-Kraftstoff-Volumen durch eine in der Vorlaufphase herbeigeführte Ankerbewegung innerhalb des Ankerfreiwegs erzielt. Hierzu wird bei der Bestromung der Magnetspule mit Stromimpulsen die Größe der Stromimpulse so festgelegt, dass der Anker eine fortlaufende Hubbewegung innerhalb seines verfügbaren Ankerfreiwegs ausführt, somit das Ventilglied nicht vom Magnetanker mitgenommen wird und das Einspritzventil geschlossen bleibt.

### Kurze Beschreibung der Zeichnung

Die Erfindung ist anhand eines in der Zeichnung dargestellten Ausführungsbeispiels eines Einspritzventils in der nachfolgenden Beschreibung näher erläutert. Dabei zeigt die einzige Figur ein in einen Verbrennungszylinder eines Ottomotors eingesetztes und an ein elektrisches Steuergerät angeschlossenes Einspritzventil im Längsschnitt.

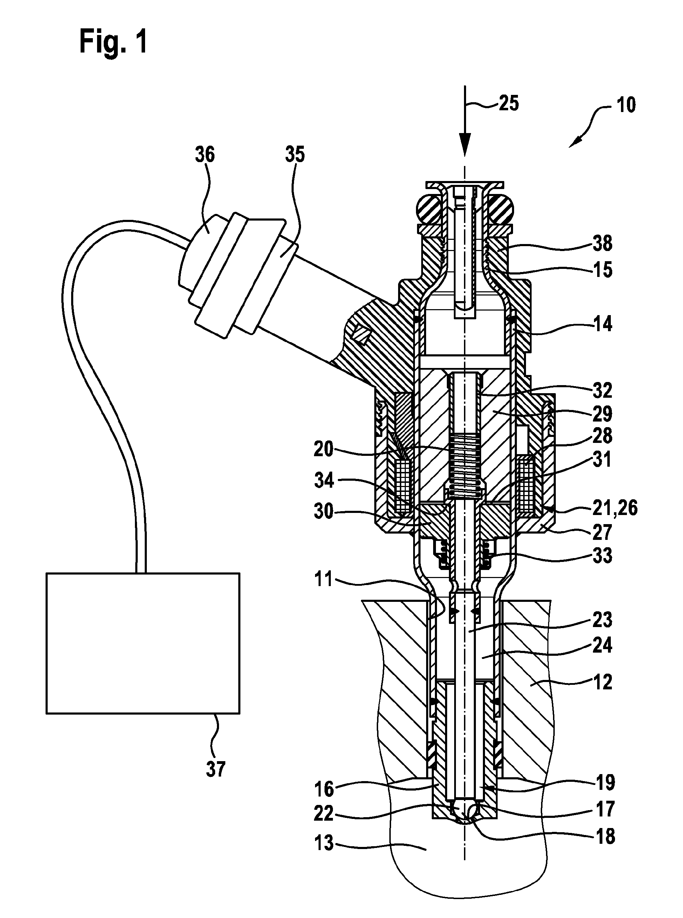

Das in Figur 1 überwiegend im Längsschnitt dargestellte Einspritzventil 10 ist in eine Aufnahmebohrung 11 in einem Verbrennungszylinder 12 eines Ottomotors eingesetzt, wobei das eine Ventilende in einen Brennraum 13 des Verbrennungszylinders 12 hineinragt. Alternativ kann das Einspritzventil 10 auch im Ansaugtrakt des Verbrennungszylinders 12 angeordnet sein und mit dem Ventilende in einen dem Brennraum vorgeordneten Zylindereinlass hineinragen. Das Einspritzventil 10 weist ein Ventilgehäuse 14 auf, das an seinem vom Brennraum 13 abgekehrten einen Ende mit einer Einlasshülse 15 und an seinem dem Brennraum 13 zugekehrten anderen Ende mit einem Ventilsitzkörper 16 jeweils stoffschlüssig verbunden ist. Am Ventilsitzkörper 16 ist üblicherweise ein Ventilsitz 17 ausgebildet, der eine in den Ventilsitzkörper 16 eingebrachte Ventilöffnung 18 umschließt, die im Ausführungsbeispiel durch Spritzlöcher realisiert ist. Zum Freigeben und Schließen der Ventilöffnung 18 besitzt das Einspritzventil 10 ein Ventilglied 19, das unter der Wirkung einer Ventilschließfeder 20 auf dem Ventilsitz 17 dicht aufsitzt und mittels eines elektrischen Aktors 21 gegen die Schließkraft der Ventilschließfeder 20 vom Ventilsitz 17 abhebbar ist. Das Ventilglied 19 besitzt einen mit dem Ventilsitz 17 kommunizierenden Schließkopf 22 und einen den Schließkopf 22 tragenden nadelförmigen Schaft 23, an dem der elektrische Aktor 21 angreift. Dem Ventilsitz 17 mit Ventilöffnung 18 ist eine Ventilkammer 24 vorgelagert, die über einen hohlen Schaftabschnitt des Schaftes 23 des Ventilglieds 19 mit der Einlasshülse 15 in Verbindung steht. Die Einlasshülse 15 ist an einem Kraftstoffzufluss angeschlossen, der in der Zeichnung mit Pfeil 25 symbolisiert ist.

Im dargestellten Ausführungsbeispiel des Einspritzventils 10 ist als elektrischer Aktor 21 ein Elektromagnet 26, bestehend aus einem Magnettopf 27, einer Magnetspule 28 einem hohlzylindrischen Magnetkern 29 und einem mit dem Schaft 23 verbundenen Magnetanker 30, der mit dem Magnetkern 29 einen Arbeitsluftspalt 31 einschließt, eingesetzt. Die Magnetspule 28 sitzt auf dem Ventilgehäuse 14 und ist im Innern des konzentrisch zum Ventilgehäuse 14 angeordneten Magnettopfes 27 aufgenommen, der mit seinem Topfboden das Ventilgehäuse 14 umschließt und mit diesem stoffschlüssig verbunden ist, während der hohlzylindrische Magnetkern 29 im Innern des Ventilgehäuses 14 festgelegt ist. Im hohlen Innern des Magnetkerns 29 ist die Ventilschließfeder 20 angeordnet, die sich einerseits an dem Schaft 23 des Ventilglieds 19 und andererseits an einem Justierelement 32 abstützt, das im Magnetkern 29, z.B. durch Einpressen, festgelegt ist. Der auf dem Schaft 23 sitzende Magnetanker 30 wird unter der Wirkung einer Dämpfungsfeder 33 an einen am Schaft 23 ausgebildeten Anschlag 34 angedrückt. Die Dämpfungsfeder 33 stützt sich ihrerseits auf der vom Anschlag 34 abgekehrten Seite des Magnetankers 30 und an dem Schaft 23 ab. Die Dämpfungsfeder 33 hat die Aufgabe, ein Prellen des Schließkopfs 22 beim Schließvorgang des Ventils zu dämpfen. Die Magnetspule 28 ist an einem elektrischen Steckeranschluss 35 angeschlossen und über einen mit dem Steckeranschluss 35 eingesteckten Anschlussstecker 36 mit einem Steuergerät 37 des Ottomotors verbunden. Der elektrische Steckeranschluss 35, die Einlasshülse 15 sowie ein Teil des Ventilgehäuses 14 und die Topföffnung des Magnettopfs 27 sind mit einem Kunststoffmantel 38 umspritzt.

Das an das Steuergerät 37 elektrische angeschlossene Einspritzventil 10 arbeitet in der Weise, dass Kraftstoff in für eine optimierte Verbrennung dosierten Mengen in den Brennraum 13 oder in den Einlass des Verbrennungszylinders 12 eingespritzt wird. Die eingespritzte Kraftstoffmenge bildet mit angesaugter Luft ein brennfähiges Gemisch. Das Steuergerät 37 übernimmt die Berechnung der jeweiligen Einspritzmenge und Einspritzdauer und die dazu erforderliche Ansteuerung des elektrischen Aktors 21 des Einspritzventils 10.

Ottomotoren werden zunehmend auch mit Ethanol und ethanolhaltigen Kraftstoffen betrieben. Bei Betrieb des Ottomotors mit Ethanol (E100) oder einer hochprozentigen Ethanol-Beimischung (E85 mit 85% Ethanol-Anteil) wird zur Sicherstellung des Kaltstarts bei niedrigen Temperatur, z.B. -5°C, dem im Einspritzventil 10 vorhandenen Kraftstoffvolumen vor dem Einspritzen thermische Energie zugeführt, damit sich der Ethanol-Kraftstoff erwärmt, um sein Verdampfen zu erleichtern und somit ein brennfähiges Gemisch im Brennraum 13 des Verbrennungszylinders 12 zu erzeugen. Die erforderliche thermische Energie wird aus der Verlustleistung des elektrischen Aktors 21 gewonnen, indem in einer dem Kaltstart zeitlich vorgeschalteten Vorlaufphase der elektrische Aktor 21 definiert bestromt wird. Die vom Steuergerät 37 ausgelöste Bestromung des elektrischen Aktors 21 in der Vorlaufphase wird dabei so durchgeführt, dass die vom Aktor 21 am Ventilglied 19 gegen die Schließkraft der Ventilschließfeder 20 angreifende Betätigungskraft kleiner ist als die am Ventilglied 19 zum Schließen der Ventilöffnung 18 wirksame, von der Ventilschließfeder 20 aufgebrachte Schließkraft. Fließt der Strom durch die Magnetspule 28 des als Elektromagnet 26 ausgebildeten elektrischen Aktors 21, so erwärmt sich diese durch die elektrische Verlustleistung, die abhängig ist von der Stromstärke und dem ohmschen Widerstand der Magnetspule 28. Die Wärme wird von der Magnetspule 28 weggeleitet hin zur Zone mit niedriger Temperatur. Zunächst wird das Ventilgehäuse 14 enivärmt. Ist der Kraftstoff kälter als das den Kraftstoff umgebende Ventilgehäuse 14, so fließt auch Wärme in den Kraftstoff, dessen Temperatur, wie gewünscht, ansteigt. Die physikalischen Größen, die die Temperaturerhöhung bestimmen, sind die für die Aufwärmung zur Verfügung stehende Zeit, also die Zeit der Vorlaufphase, der Betrag der Verlustleistung, die Wärmeleitung durch die Werkstoffe zwischen Spulendraht der Magnetspule 28 und dem Kraftstoff, der Wärmeübergang von dem Ventilgehäuse 14 zum Kraftstoff sowie die zu erwärmenden Massen.

Die Bestromung der Magnetspule 28 kann auf verschiedene Weise erfolgen, wobei die Art der Bestromung immer voraussetzt, dass der Elektromagnet 26 nicht aktiviert wird, also die durch Bestromung erzeugte Magnetkraft nicht ausreicht, den Schließkopf 22 gegen die Schließkraft der Ventilschließfeder 20 vom Ventilsitz 17 abzuheben. Die Stromstärke ist dabei abhängig von der Konstruktion des Einspritzventils 10, wie den wirksamen Flächen von Magnetkern 29 und Magnetanker 30, der Federkraft der Ventilschließfeder 20, und von den Umgebungsbedingungen, wie Systemdruck des Kraftstoffs und Temperatur, und von der Wahl des Stromprofils. Die Höhe der Stromstärke muss dabei für jeden Anwendungsfall separat bestimmt und validiert werden.

Die Dauer der Vorlaufphase wird auf die Bestromung des Aktors 21 und auf den ventil individuellen Wärmeübergang vom Aktor 21 auf den Kraftstoff abgestimmt. Bevorzugt wird die zeitliche Dauer der Vorlaufphase ventilindividuell, d. h. für jeden Bautyp von Einspritzventilen, empirisch ermittelt.

Das Stromprofil kann einen konstanten Stromverlauf aufweisen. In diesem Fall wird die Stromstärke so bemessen dass sie unterhalb einer Schwelle bleibt, bei der die entstehende Magnetkraft das Einspritzventil 10 durch Abheben des Schließkopfs 22 vom Ventilsitz 17 aktiviert und Kraftstoff in den Verbrennungszylinder 12 einspritzt.

Als Strom profil können auch Stromimpulse mit gleichen oder wechselnden Vorzeichen gewählt werden. Bei der Bestromung mit Stromimpulsen gleichen Vorzeichens wird die Dauer der Stromimpulse so klein gewählt, dass sich eine für das Öffnen des Einspritzventils ausreichende Magnetkraft nicht ausbilden kann. Gegenüber der Bestromung mit einem konstanten Stromverlauf kann hier das Stromniveau höher gewählt werden. Zur Erzeugung einer ausreichenden Wärmemenge über die elektrische Verlustleistung wird eine Serie von Stromimpulsen geschaltet, deren Unterbrechungsdauer lang genug ist, um das entstehende Magnetfeld wieder abklingen zu lassen. Durch geeignete Lernalgorithmen wird die erforderliche Verzögerungszeit zwischen Bestromung und Ventilöffen ermittelt. Das Maximum der Bestromung wird geringfügig kleiner gewählt als die ermittelte Verzögerungszeit. Bei Bestromung der Magnetspule 28 mit Stromimpulsen, die wechselnde Vorzeichen aufweisen, werden die Pausen zwischen den einzelnen Serien von Stromimpulsen verkürzt und es wird eine höhere effektive Stromstärke ermöglicht.

Der Wärmeübergang von den Ventilkomponenten zu dem in der Ventilkammer 24 befindlichen Kraftstoffvolumen kann durch Bewegung des Kraftstoffvolumens deutlich verbessert werden, so dass mit einer niedrigeren Stromstärke oder einer kürzeren Vorlaufphase die erforderliche Erwärmung des Kraftstoffvolumens auf Verdampfungsniveau des Ethanols erzielt werden kann. Diese zusätzliche Verfahrensmaßnahme wird bei solchen Einspritzventilen angewendet, deren Elektromagnet 26 konstruktiv mit einem sog. Ankerfreiweg ausgestattet sind. Ein solches Einspritzventil mit Ankerfreiweg ist in der DE 101 08 945 A1 dargestellt und beschrieben. Der Ankerfreiweg ermöglicht bei Bestromung des Elektromagneten 26 zwecks Einspritzens von Kraftstoff einen anfänglichen Freihub des Magnetankers 30, ohne dass dieser seine Hubbewegung auf das Ventilglied 19 überträgt und die Ventilöffnung 18 freigibt. Bei einem solchen Einspritzventil wird in der Vorlaufphase die Magnetspule 28 mit Stromimpulsen beaufschlagt, deren Stromniveau so festgelegt wird, dass der Magnetanker 30 in seinem verfügbaren Freiweg eine fortlaufende Hubbewegung ohne Ventilbetätigung ausführt. Der Magnetanker 30 wird also wechselweise angezogen und losgelassen, so dass seine wechselnde Hubrichtung eine Strömung des Kraftstoffs in der Ventilkammer 24 erzeugt.

Gemäß einer Verfahrenvariante kann die zeitliche Dauer der Vorlaufphase mit der beschriebenen Bestromung der Magnetspule 28 unterhalb der Aktivierungsschwelle für die Einspritzung ohne Komfortbeeinträchtigung für den Fahrer dadurch vergrößert werden, dass die Vorlaufphase nicht erst durch das Betätigen der Startautomatik des Fahrzeugs in Gang gesetzt wird, sondern durch einem Motorstart vorangehende andere Eingriffe am Fahrzeug, z. B. durch Öffnen der Fahrertür oder durch Entriegeln des verschlossenen Fahrzeugs.

## Patentansprüche

1. Verfahren zur Sicherstellung des Kaltstarts eines mit Ethanol-Kraftstoff betriebenen Ottomotors mit mindestens einem Verbrennungszylinder (12) und mit mindestens einem Einspritzventil (10) zum dosierten Einspritzen von Kraftstoff in den Verbrennungszylinder (12), das ein Ventilglied (19) zum Schließen und Freigeben einer Ventilöffnung (18), eine am Ventilglied (19) wirksame Schließkraft zum Schließen der Ventilöffnung (15) und einen das Ventilglied (19) gegen die Schließkraft betätigenden, von einem Steuergerät (37) gesteuerten elektrischen Aktor (21) aufweist, bei welchem zur Bildung eines brennfähigen Kraftstoffgemisches im Verbrennungszylinder (12) vor dem Einspritzen im Einspritzventil (10) thermische Energie erzeugt und dem im Einspritzventil (10) befindlichen Kraftstoff zugeführt wird, **dadurch gekennzeichnet, dass** die thermische Energie aus der Verlustleistung des elektrischen Aktors (21) gewonnen wird, indem in einer dem Kaltstart zeitlich vorgeschalteten Vorlaufphase der elektrische Aktor (21) definiert bestromt wird.

2. Verfahren nach Anspruch 1, **dadurch gekennzeichnet, dass** die Bestromung des elektrischen Aktors (21) so durchgeführt wird, dass die am Ventilglied (19) angreifende Betätigungskraft des Aktors (21) stets kleiner ist als die am Ventilglied (19) wirksame Schließkraft.

3. Verfahren nach Anspruch 2, **dadurch gekennzeichnet, dass** die Bestromung mit Konstantstrom durchgeführt wird.

4. Verfahren nach Anspruch 2, **dadurch gekennzeichnet, dass** die Bestromung mit Stromimpulsen gleichen oder wechselnden Vorzeichens durchgeführt wird.

5. Verfahren nach einem der Ansprüche 1 bis 4, **dadurch gekennzeichnet, dass** die Zeitdauer der Vorlaufphase auf die Bestromung des Aktors (21) und auf den ventilindividuellen Wärmeübergang vom Aktor (21) auf den Kraftstoff abgestimmt wird.

6. Verfahren nach Anspruch 5, **dadurch gekennzeichnet, dass** die Zeitdauer der Vorlaufphase bei jedem Bautyp des Einspritzventils (10) empirisch ermittelt wird.

7. Verfahren nach einem der Ansprüche 1 bis 6, **dadurch gekennzeichnet, dass** als elektrischer Aktor (21) ein Elektromagnet (26) mit Magnettopf (27), Magnetspule (28), Magnetkern (29) und Magnetanker (30) verwendet und die Verlustleistung durch Bestromung der Magnetspule (28) erzeugt wird.

8. Verfahren nach Anspruch 7, **dadurch gekennzeichnet, dass** der Elektromagnet (26) konstruktiv mit einem sog. Ankerfreiweg ausgestattet und bei der Bestromung der Magnetspule (28) mit Stromimpulsen die Größe der Stromimpulse so festgelegt wird, dass der Magnetanker (30) in seinem verfügbaren Ankerfreiweg eine fortlaufende Hubbewegung ausführt.
